# EUROPEAN PATENT SPECIFICATION

(11) **EP 1 217 892 B1**
(45) Date of publication and mention of the grant of the patent: **15.03.2006**
(21) Application number: 00963743.0
(22) Date of filing: 21.09.2000
(51) Int. Cl.: A01N 59/00, A01N 25/22, C02F 1/76

(54) **BIOCIDAL APPLICATIONS OF CONCENTRATED AQUEOUS BROMINE CHLORIDE SOLUTIONS**
BIOZIDE ANWENDUNGEN VON KONZENTRIERTEN WÄSSRIGEN BROMCHLORID-LÖSUNGEN
APPLICATIONS BIOCIDES DE SOLUTIONS AQUEUSES CONCENTREES DE CHLORURE DE BROME

(30) Priority: 24.09.1999 US 404184; 30.11.1999 US 451319; 18.02.2000 US 506611
(43) Date of publication of application: 03.07.2002
(73) Proprietor: ALBEMARLE CORPORATION, Baton Rouge, LA 70801-1765 (US)
(72) Inventor: MOORE, Robert, M., Jr., Baton Rouge, LA 70820 (US); NALEPA, Christopher, J., Baton Rouge, LA 70816 (US)
(74) Representative: UEXKÜLL & STOLBERG
(86) International application number: PCT/US2000/026130
(87) International publication number: WO 2001/020996

(56) References cited:
- WO-A-99/62339
- US-A- 3 152 073
- US-A- 3 328 294
- US-A- 3 558 503
- US-A- 4 935 153
- US-A- 5 141 652
- US-A- 5 900 512

## Description

### BACKGROUND

Bromine-based biocides have proven biocidal advantages over chlorination-dechlorination for the microbiological control of cooling waters and disinfection of waste treatment systems. The water treatment industry recognizes these advantages to be cost-effective control at higher pH values, almost no loss in biocidal activity in the presence of ammonia, and effective control of bacteria, algae and mollusks.

A common way of introducing bromine-based biocides into a water system is through the use of aqueous NaBr in conjunction with NaOCl bleach. The user feeds both materials to a common point whereupon the NaOCl oxidizes the bromide ion to HOBr/OBr⊖. This activated solution is then introduced directly into the water system to be treated. The feeding of the two liquids in this fashion is necessary because the HOBr/OBr⊖ mixture is unstable and has to be generated on site just prior to its introduction to the water. Furthermore, the feeding and metering of two liquids is cumbersome, especially as the system has to be designed to allow time for the activation of bromide ion to occur. Consequently many biocide users have expressed the need for a single-feed, bromine-based biocide. Molecular bromine chloride has been considered to meet these demands. It is a liquid at room temperature and can be fed directly to the water system, where immediate hydrolysis occurs to yield HOBr.

BrCl + H₂O → HOBr + HCl (1)

Properties of bromine chloride are listed in Table 1.

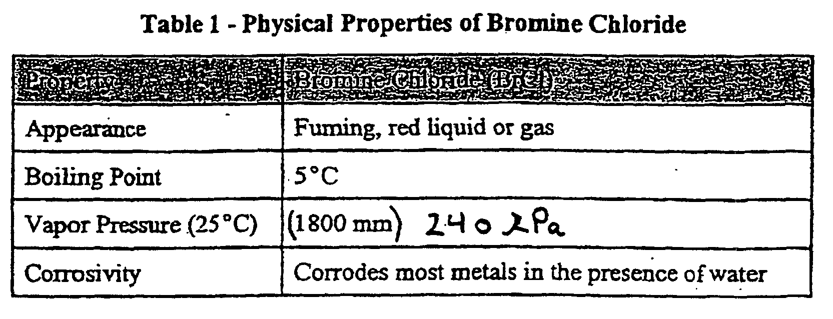

It can be seen that certain characteristics of this material --especially its corrosiveness, high vapor pressure and fuming tendency -- necessitate care and skill in its handling and use.

Early efforts to provide a single-feed, bromine-based biocide comprised complexing bromine with excess bromide ion in the presence of strong acid and stabilizing the resultant solutions with ethanolamine. The resultant solutions of ethanolammonium hydrogen perbromide contained up to 38% by weight elemental bromine. See in this connection, Favstritsky, U.S. Pat. No. 4,886,915; and Favstritsky, Hein, and Squires, U. S. Pat. No. 4,966,716.

These solutions permitted introduction of biocidally active bromine to a water system using a single feed. As in the case of bromine chloride, the ethanolammonium hydrogen perbromide hydrolyzed in water to release HOBr. The vapor pressures of these solutions were lower than bromine chloride. Nevertheless, the solutions still possessed measurable vapor pressures, and thus tended to produce undesirable reddish-colored vapors during storage and use.

An economically acceptable way of stabilizing high concentrations of aqueous solutions of bromine chloride is described in U.S. Pat. No. 5,141,652 to Moore, et al. The solution is prepared from bromine chloride, water, and a halide salt or hydrohalic acid. These solutions were found to decompose at a rate of less than 30% per year and in cases of high halide salt concentration, less than 5% per year. Moreover, solutions containing the equivalent of 15% elemental bromine could be prepared. Unfortunately, the relatively high acidity of these solutions and their tendency to be corrosive and fuming impose limitations on their commercial acceptance.

Many solid bromine-based biocides such as BrClDMH (1,3-bromochloro-5,5-dimethylhydantoin) are limited in the amount of material that can be dissolved in water and fed as a liquid to the water treatment system. For example, the solubility of BrClDMH in water is only around 0.15%. Another limitation of such derivatives is that at neutral pH, HOBr rapidly decomposes, eventually forming bromide ions. Thus, the ability to store and transport these aqueous solutions is greatly limited and of questionable commercial feasibility.

U.S. Pat. No. 3,558,503 to Goodenough et al. describes certain aqueous bromine solutions stabilized with various stabilizing agents and various uses to which such solutions can be put. The compositions described in the patent comprise an aqueous bromine solution having from 0.01 to 100,000 parts per million by weight of bromine values wherein the molar ratio of bromine to nitrogen present in the bromine stabilizer ranges from 2.0 to I to 0.5 to 1. The stabilizer used is biuret, succinimide, urea, a lower aliphatic mono- or disubstituted urea containing from 2 to 4 carbon atoms in each substituent group, sulfamic acid, or an alkyl sulfonamide of the formula RSO₃NH₂ where R is a methyl or ethyl group. The solution also contains sufficient hydroxide additive to provide a pH in the solution ranging from 8 to 10, the hydroxide additive being an alkaline earth hydroxide or an alkali metal hydroxide.

U.S. Pat. No. 5,683,654 to Dallmier et al. discusses the preparation of aqueous alkali metal or alkaline earth metal hypobromite solutions by mixing an aqueous solution of alkali or alkaline earth metal hypochlorite with a water soluble bromide ion source to form a solution of unstabilized alkali or alkaline earth metal hypobromite. To this solution is added an aqueous solution of an alkali metal sulfamate having a temperature of at least 50°C and in an amount that provides a molar ratio of alkali metal sulfamate to alkali or alkaline earth metal hypobromite of from 0.5 to 6 whereby a stabilized aqueous alkali or alkaline earth metal hypobromite solution is formed. The Dallmier et al. patent teaches that much higher levels of available halogen for disinfection were attained by this approach as compared to the Goodenongh et aL approach. But the Dallmier et aL patent acknowledges that in their process, the stabilization must occur quickly after the unstable NaOBr is formed.

Thus, there remains a need for methods of disinfecting surfaces and of sanitizing bodies of water using a single-feed, bromine-based biocide that is water-soluble, non-acidic, and noncorrosive.

### THE INVENTION

This invention provides methods for disinfecting surfaces and for sanitizing bodies of water using a single-feed, bromine-based biocide. Surfaces that are disinfected using the methods of this invention include kitchen counters, bathroom counters, walls, and floors. The bodies of water that may be sanitized using the methods of this invention include cooling water systems, waste water effluents, pulp and paper mills, oilfields, air washers, fire reservoirs, and evaporative condensers. These methods use concentrated liquid biocide compositions comprising biocidally active bromine as the single-feed, bromine-based biocide. Aqueous solutions of bromine chloride provide novel and eminently useful concentrated solutions of biocidally active bromine. These solutions of bromine chloride perform as well as bleach towards planktonic (solution) bacteria. Further, these solutions of bromine chloride are more effective than bleach versus biofilm (surface) bacteria, which are more difficult to kill than planktonic bacteria.

In one embodiment of this invention, a method for disinfecting a surface is provided. This method comprises applying to the surface a concentrated liquid biocide active bromine-containing composition formed from (a) bromine chloride or alkali metal dichlorohypobromite and (b) an aqueous solution of alkali metal salt of sulfamic acid having a pH of at least 7, in amounts such that (i) the active bromine content of said composition is at least about 100,000 ppm (wt/wt), and (ii) when (a) is bromine chloride, the atom ratio of nitrogen to active bromine in said composition is greater than 0.93, and when (a) is alkali metal dichlorohypobromite, the atom ratio of nitrogen to active bromine in said composition is greater than 1, wherein said surface is a kitchen counter, a bathroom counter, a wall or a floor and wherein said application to said surface is by pouring, spraying or applying with an applicator.

Preferably, the foregoing concentrated solution, when bromine choride is used as (a), is diluted with water before applying the biocide solution to the surface to be disinfected. The amount of dilution can be varied, provided that the diluted solution contains an effective biocidal concentration of the foregoing biocide composition.

When bromine choride is used as (a), the concentrated liquid biocide composition may further comprise an alkali metal chloride or alkali metal bromide. Preferably the alkali metal is sodium. Preferably said pH is in the range of 7 to about 13.5.

Preferably said alkali metal dichlorobypobromite is a preformed aqueous solution of alkali metal dichlorohypobromite, and said aqueous solution of alkali metal salt of sulfamic acid is a preformed aqueous solution of the sodium salt of sulfamic acid.

Preferably the preformed aqueous solution of alkali metal dichlorohypobromite is a preformed aqueous solution of sodium dichlorohypobramite.

Preferably the aqueous solution of alkali metal salt of sulfamic acid is formed by mixing together in water (i) sulfamic acid and/or an alkali metal salt of sulfamic acid, and (ii) alkali metal base in proportions such that an aqueous solution of alkali metal salt of sulfamic acid is formed having a pH of at least 7.

Another embodiment of this invention provides a method of sanitizing a body of water which method comprises introducing into the body of water a concentrated liquid biocide composition. The biocidal composition is comprised of (a) bromine chloride and (b) an aqueous solution of alkali metal salt of sulfamic acid having a pH of at least about 7. The amounts of (a) and (b) are such that, in the biocidal composition, (i) the active bromine content is at least about 100,000 ppm (wt/wt), and (ii) the atom ratio of nitrogen to active bromine is greater than 0.93.

Preferably said pH is in the range of 7 to about 13.5.

Yet another embodiment of this invention provides a method of sanitizing a body of water which comprises introducing into the body of water a concentrated liquid biocide composition. The biocidal composition is comprised of(a) alkali metal dichlorohypobromite and (b) an aqueous solution of alkali metal salt of sulfamic acid having a pH of at least about 7. The amounts of (a) and (b) are such that, in the biocidal composition, (i) the active bromine content is at least about 100,000 ppm (wt/wt), and (ii) the atom ratio of nitrogen to active bromine is greater than 1.

A further embodiment is a method of eradicating biofilm which comprises contacting the biofilm with an aqueous medium containing a biofilm eradicating concentration of a biocide composition formed from (a) bromine chloride and (b) an alkali metal salt of sulfamic acid in water in amounts such that the atom ratio of nitrogen to active bromine in said composition is greater than 0.93. Among biofilm species effectively combatted in this manner are biofilms comprising *P. aeruginosa* and *K. pneumoniae*.

Preferably the biofilm comprises P aeruginosa. It may additionally comprise K. pneumoniae.

A still further embodiment is a method of deactivating bacteria which comprises contacting the bacteria with an aqueous medium containing a bacteria deactivaring concentration of an active bromine-containing biocide composition formed from (a) bromine chloride and (b) an alkali metal salt of sulfamic acid in water in amounts such that the atom ratio of nitrogen to active bromine in said composition is greater than 0.93. Among bareria effectively deactivated (killed) in this manner are bacteria comprising *E. coli, P. aeruginosa*, and *S*. *aureus*.

The above and other embodiments of this invention will be still further apparent from the ensuing description and appended claims.

An advantage of this invention is that the concentrated liquid biocide compositions provided herein are at least as effective as bleach as a biocide, without the undesirable properties of bleach, which include instability and an unpleasant odor. Thus, the methods of this invention may replace those which use bleach in biocidal applications. The organisms that may be controlled using the methods of this invention include bacteria, fungi, slime, and mollusks. Another advantage of the methods of this invention is that the concentrated liquid biocide compositions provided herein are water-soluble, non-acidic, and noncorrosive. A further advantage of this invention is that the concentrated liquid biocide compositions provided by this invention are single-feed biocides, the term single-feed signifying that the end user need not do any further mixing of components to produce the concentrated liquid biocide composition.

The method for disinfecting a surface comprises applying a concentrated liquid biocide composition of bromine chloride or alkali metal dichlorohypobromite to the surface to be disinfected. The concentrated liquid biocide composition may be applied to the surface to be disinfected in various ways. The composition may be poured directly onto the surface, sprayed onto the surface, or poured or sprayed onto an applicator which is then brought into contact with the surface. Applicators include, but are not limited to, cloths, sponges, paper towels, and mops.

The method of sanitizing a body of water comprises introducing a concentrated liquid biocide composition of bromine chloride or alkali metal dichlorohypobromite into the body of water. A variery of methods may be used to introduce the concentrated liquid biocide composition to the body of water to be sanitized. The concentrated liquid biocide composition may be added directly to the body of water, either all at once or slowly over time, for example via a pump or feeder. In systems in which the water is circulated through an apparatus, the concentrated liquid biocide composition may be added to this apparatus.

The addition of the concentrated liquid biocide composition to the body of water to be sanitized preferably yields a concentration of biocide in the body of wafer such that in the range of from 2 to 10 milligrams per liter of total available halogen, expressed as Cl₂, is present in the body of water. In a preferred embodiment, the concentrated liquid biocide composition is introduced into the body of water as required, such that in the range of from 2 to 10 milligrams per liter of total available halogen, expressed as Cl₂, is maintained within the body of water. A more preferred amount of total available halogen, expressed as Cl₂, in the body of water is from 2 to 5 milligrams per liter. These concentrations of total available halogen, expressed as Cl₂, are known in the art to be sufficient for sanitizing a body of water and for maintaining sanitization of a body of water.

In a preferred embodiment bromine chloride is used as (a).

Said concentrated liquid biocide composition may be introduced directly into said body of water all at once. It may also be introduced into said body of water slowly over time.

Further the concentrated liquid biocide composition may comprise an alkali metal chloride or alkali metal bromide. The alkali metal thereof is preferably sodium.

In another prefered embodiment alkali metal dichloro hypobromite is used as (a).

Preferably said alkali metal dichlorohypobromite is a preformed aqueous solution of alkali metal dichlorohypobromite, and said aqueous solution of alkali metal salt of sulfamic acid is a preformed aqueous solution of the sodium salt of sulfamic acid.

Preferably the preformed aqueous solution of alkali metal dichlorohypobromite is a preformed aqueous solution of sodium dichlorohypobromite.

To produce a concentrated liquid biocide composition, (a) bromine chloride and (b) an aqueous solution of alkali metal salt of sulfamic acid (preferably the sodium salt) are mixed, the solution of (b) used having a pH of at least about 7, and preferably in the range of 7 to about 13.5. The amounts of (a) and (b) used are such that (i) the content of active bromine in the composition is at least 100,000 ppm (wt/wt), and (ii) the atom ratio of nitrogen to active bromine in the composition is greater than 0.93. It is preferred to utilize an atom ratio of nitrogen to active bromine that is greater than 1, and the pH is preferably in the range of 7 to about 13.5.

Preferably, the aqueous solution of alkali metal salt of sulfamic acid used is preformed by mixing together in water, (i) sulfamic acid and/or an alkali metal salt of sulfamic acid, and (ii) alkali metal base in proportions such that an aqueous solution of alkali metal salt of sulfamic acid is formed having a pH of at least 7. If sulfamic acid itself is used as the starting material, it is used initially as a slurry in water with which the alkali metal base is mixed. It is preferred that the alkali metal salt of sulfamic acid is the lithium, sodium, or potassium salt; more preferred are the sodium and potassium salts. Highly preferred as the alkali metal salt of sulfamic acid is the sodium salt.

When mixing the bromine chloride with the aqueous solution of alkali metal salt of sulfamic acid, it is desirable to maintain the desired pH of the resulting solution at 7 or above by also introducing into the solution (continuously or intermittently, as desired) additional alkali metal base, such as by a co-feed of an aqueous solution of alkali metal base.

The use of bromine chloride as the source of the active bromine in the above process is advantageous because in the resulting aqueous compositions, all of the bromine of the bromine chloride is made available as active bromine in solution. In other words, the chlorine of the bromine chloride is converted in the process to dissolved alkali metal chloride salt, thereby liberating the bromine as the active bromine content of the biocidal composition. Thus the more expensive component of the bromine chloride -- *viz*., bromine -- is fully utilized in forming active bromine in the aqueous biocidal composition, and concurrently the less expensive component -- the anionic chlorine in the bromine chloride -- makes this beneficial result possible.

By utilizing bromine chloride with caustic in the composition, higher levels of active halogen are achievable compared to the levels obtained by the addition of sodium hypochlorite to sodium bromide. The process and the compositions formed also have about twice the content of active bromine as the most concentrated solutions produced pursuant to the Goodenough, *et al*. patent. Moreover, even at the high levels of active bromine that exist in the compositions used in this invention, it has been found possible to provide biocidal compositions that maintain these high levels of active bromine for at least a two month period, and that do not exhibit a visible or offensive vapor or odor during this period.

This invention uses an aqueous biocide composition comprising water having in solution therein (i) an active bromine content derived from bromine chloride of at least about 100,000 ppm (wt/wt), (ii) an alkali metal salt of sulfamic acid, and (iii) an alkali metal chloride, wherein the relative proportions of (i) and (ii) are such that the atom ratio ofnitrogen to active bromine in the resultant composition is greater than 1, and the pH of the composition is at least 7, and preferably in the range of 7 to about 13.5. Again, the preferred alkali metal salt of sulfamic acid is the lithium, sodium, or potassium salt; more preferably, it is the sodium or potassium salt; the most preferred alkali metal salt of sulfamic acid is the sodium salt. Similarly, the alkali metal chloride is preferably lithium chloride, sodium chloride, or potassium chloride; more preferably it is sodium chloride or potassium chloride. Highly preferred as the alkali metal chloride is sodium chloride. In a less preferred embodiment, (iii) is an alkali metal bromide, most preferably sodium bromide.

This invention further uses a process for producing alkali metal dichlorohypobromite, M[BrCl₂] (M = alkali metal), which is preformed by pre-mixing bromine chloride with aqueous alkali metal chloride, and the bromine chloride is used in this form to provide the active bromine content of the biocidal composition. The alkali metal of the alkali metal dichlorohypobromite may be lithium, sodium, potassium, rubidium, or cesium; preferred are lithium, sodium, and potassium; more preferred are sodium and potassium. Sodium dichlorohypobromite is the most preferred alkali metal dichlorohypobromite. Dichlorohypobromite is also referred to in the art as dichlorobromate, bromide dichloride, and dichlorobromide.

To form the biocidal composition, the alkali metal dichlorohypobromite is mixed with an aqueous solution of an alkali metal salt of sulfamic acid which has a pH of at least 7. In the resultant biocidal composition, the atom ratio of nitrogen to active bromine is greater than 0.93. It is preferred that the atom ratio is greater than 1.

In each of the embodiments of this invention, the atom ratio of nitrogen to active bromine in the biocidal composition is preferably in the range of 1.1 to 1.5 and more preferably in the range of from 1.35 to 1.5. Still higher ratios can be employed, if desired.

The following examples are presented for purposes of illustration.

### EXAMPLES

A general procedure for preparing the compositions of this invention using sulfamic acid involves, as a first step, forming a slurry of sulfamic acid in water. Typically the pH of this slurry is below 1 pH unit. Sodium hydroxide at 50% concentration is then added until the solid is completely dissolved. Additional 50% NaOH is added until the desired pH is reached. Bromine chloride is then added at a rate to allow dissolution without forming a pool of halogen on the bottom of the reactor. On a laboratory scale, a convenient rate of addition is approximately two drops per second. Sodium hydroxide (*e*.*g*., 25% or 50%) is co-fed to the reactor to maintain the desired pH (*e.g*., in the range of 7 to about 13.5, and it may be possible to operate even at a pH in the range of 13.5 to 14). It has been found that stable solutions containing as much as 26% active bromine (11.5% on an active chlorine basis) can be prepared by the process of this invention.

Various compositions were prepared using the above general procedure and the active bromine content of the resultant compositions was determined analytically. The conditions used and results obtained (observations on odor and vapor, and initial contents of active bromine in the solutions) are summarized in Table 2.

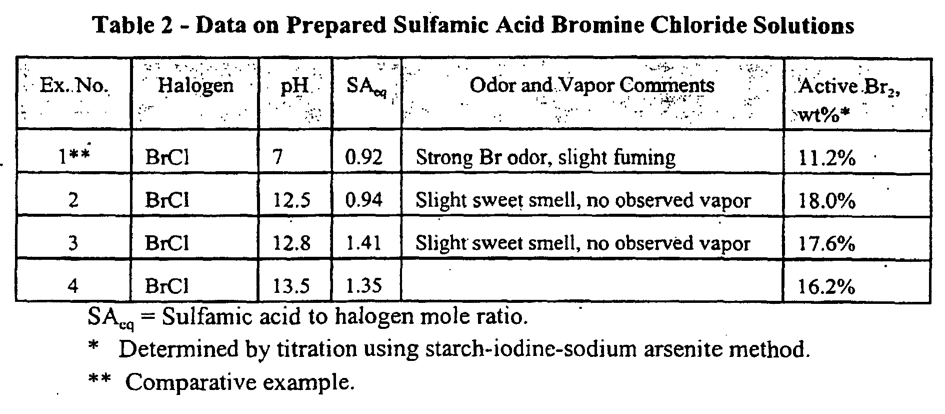

The specific details for Examples 1-4 of Table 2 are given below. Example 5 illustrates the embodiment of the invention wherein an alkali metal dichlorohypobromite is utilized as the source of active bromine. Examples 6 and 7 illustrate the efficacy of bromine chloride towards bacteria.

### EXAMPLE 1

### Bromine Chloride, Caustic and Sodium Sulfamate at Neutral pH

A I liter flask was charged with 52.0 g of sulfamic acid and 250 g of water. Sodium sulfamate was prepared by adding 60.0 g of 50% sodium hydroxide to the stirred slurry. Bromine chloride was prepared by adding 20 g of chlorine to 47.0 g of bromine. This bromine chloride was then co-fed with 210 g of 25% sodium hydroxide to maintain the pH between 6 and 8. 5 mL of 1 M hydrochloric acid were added to bring the final pH to approximately 7±0.5. The solution, which contained some solids, was transferred to an amber bottle for storage. Starch-iodine titration of a sample of the solution indicated that it had an active bromine concentration of 11.2%.

### EXAMPLE 2

### Bromine Chloride, Caustic and Sodium Sulfamate

A 1 liter flask was charged with 107 g of sulfamic acid and 200 g of water. Sodium sulfamate was prepared by adding 93.9 g of 50% sodium hydroxide to the stirred slurry. Bromine chloride was prepared by adding 39 g of chlorine to 96.0 g of bromine. This bromine chloride was the co-fed with 319 g of 50% sodium hydroxide to maintain the pH between 11 and 13. After stirring for an additional 30 minutes, the solution, which contained some solids, was transferred to an amber bottle for storage. Starch-iodine titration of a sample of the solution indicated that it had an active bromine concentration of 18.0%. Analysis of the solution after three weeks at ambient temperature indicated that the solution still contained more than 90% of its active bromine content.

### EXAMPLE 3

### Bromine Chloride, Caustic and Sodium Sulfamate; larger scale

A 5 liter flask was charged with 470 g of sulfamic acid and 900 g of water. Sodium sulfamate was prepared by adding 436 g of 50% sodium hydroxide to the stirred slurry. Bromine chloride was prepared by adding 120 g of chlorine to 276 g of bromine. This bromine chloride was then co-fed with 1723 g of 50% sodium hydroxide to maintain the pH between 12 and 13. After stirring for an additional 60 minutes, the orange, clear solution was transferred to an polyethylene bottle for storage. Starch-iodine titration of a sample of the solution indicated that it had an active bromine concentration of 17.6%.

### EXAMPLE 4

### Bromine Chloride, Caustic and Sodium Sulfamate

A 5 liter flask was charged with 390 g of sulfamic acid and 400 g of water. Sodium sulfamate was prepared by adding 1820 g of 25% sodium hydroxide to the stirred slurry while cooling to keep the temperature below 30°C. 344 g of bromine chloride was then added. The orange, clear solution had a pH of 13.5, and was filtered and transferred to a polyethylene bottle for storage. Starch-iodine titration of a sample of the solution indicated that it had an active bromine concentration of 16.2%.

### EXAMPLE 5

### Reducing Vapor Pressure of Sodium Dichlorohypobromite with Sodium Sulfamate

Sodium dichlorohypobromite, Na[BrCl₂], is prepared by adding 30.6 g of bromine chloride to 154 g of 3M aqueous sodium chloride. Sodium sulfamate was prepared by slurrying 24.3 g of sulfamic acid in 9 g of water and adding 24.0 g of 50% sodium hydroxide dropwise to the sulfamic acid slurry; the flask heated noticeably and the solid dissolved. This sodium sulfamate solution was dropped into the 184.6 g of sodium dichlorohypobromite. An additional 24 g of 50% sodium hydroxide was added to raise the pH to 7. Analysis of this solution indicated that it had an active bromine concentration of 12.0%.

### EXAMPLE 6

### Efficacy of BrCl/Sodium Sulfamate Solutions versus Biofilm (surface) Bacteria

### Biocide Solutions

Synthetic water is prepared by adding 0.22 g CaCl₂, 0.168 g NaHCO₃, and 0.014 g NaCl to 1 L of deionized, distilled water. The mixture is sterilized by filtration through a 0.2 µm filter. This solution affords water containing 200 ppm calcium hardness (as CaCO₃), 150 ppm of alkalinity (as CaCO₃), and 150 ppm of chloride, and which has a pH of 8.05.

The stock hypochlorous acid solution is prepared from sodium hypochlorite solution (0.41 g, >4%, actual ~ 2.7%) diluted to 100 g with synthetic water. The solution is stored in a 118 ml (4 oz.) amber glass bottle in the refrigerator. Stock hypobromous acid is blended from sodium hypochlorite (0.42 g, 0.15 mmol) and sodium bromide (0.028 g, 0.27 mmol); this solution is also stored in a 118 ml (4 oz.) amber glass bottle in the refrigerator. 0.0054 g of BrClDMH, 0.0054 g of Br₂DMH, and 0.0033 g of trichloroisocyanuric acid are each added with stirring to separate 20 g solutions of synthetic water. The stock BrCl solution is prepared by diluting 0.032 g of the solution from Example 4 with 20 g of synthetic water.

The stock solutions of hypobromous acid (HOBr) and 1,3-bromochloro-5,5-dimethylhydantoin (BrClDMH) were diluted 1:10 for minimum biofilm eradication concentration (MBEC) testing (see below). The stock solutions of BrCl, hypochlorous acid (HOCl), 1,3-dibromo-5,5-dimethylhydantoin (Br₂DMH), and trichloroisocyanuric acid were diluted 1:10 and again 1:2.5 for MBEC testing. The solutions are characterized by performing another 1:10 dilution and analyzing for free or total chlorine by the DPD method using a Hach DR 700 spectrophotometer. The actual oxidant levels in the stock solutions prior to their dilution for the MBEC tests are shown in Table 3.

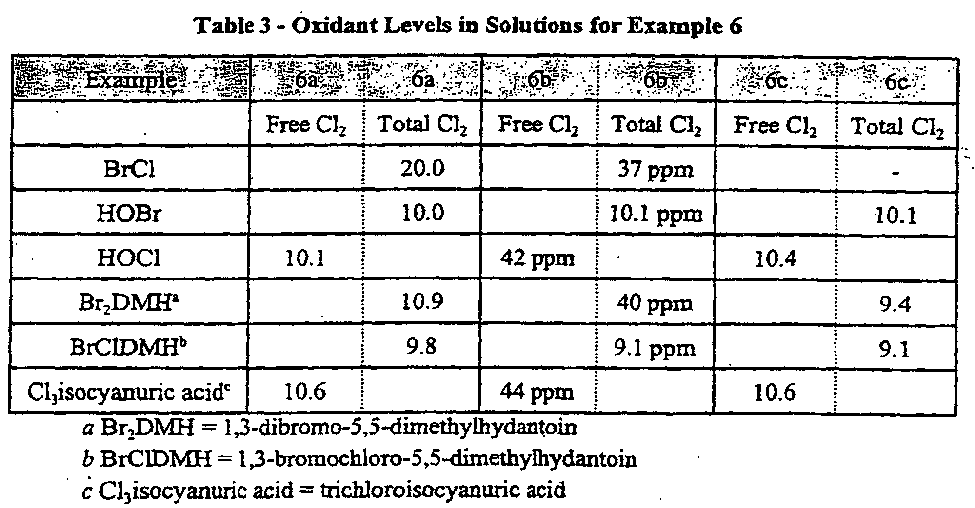

### Biofilm Preparation

*Pseudomonas aeruginosa* (ATCC 15442) biofilms, *Klebsiella pneumoniae* (University of Calgary Biofilm Research Group, environmental isolate) biofilms, and mixed biofilms are prepared on the pegs of a plate by aerobic incubation in a simple salts medium with 0.1% glucose (24 hours, 35°C) containing about 5 x10⁶ cfu/mL bacterial inoculum. The mixed biofilms of *Pseudomonas aeruginosa* and *Klebsiella pneumoniae* are prepared by inoculating 25 mL media with approximately equal amounts of each organism (5 x 10⁶ cfu/mL). The 7-day biofilms are prepared by a slight modification of these procedures: each day, spent media was replaced with fresh media and inocula.

### Minimum Biofilm Eradication Concentration

The minimum biofilm eradication concentration (MBEC) is defined as the minimum concentration of agent which results in complete biofilm deactivation. The MBEC technique generally consists of growing identical 24-hour biofilms and then challenging the biofilms with decreasing concentrations of selected antibiotics and/or biocides. After a challenge time, the biofilms are placed in wells of growth media and ultra-sonicated to remove any surviving organisms. After incubating overnight, the wells are checked for turbidity. Clear, transparent wells indicate complete deactivation of biofilm bacteria. Conversely, turbidity (growth) indicates incomplete deactivation.

In all cases, the pegs are then rinsed in synthetic water and challenged by the biocide. Following the biocide challenge, the pegs are rinsed twice with synthetic water and then sonicated into Mueller-Hinton broth (225 µL per well). The broth is then incubated for 18 hours at 35°C. MBEC endpoints were unambiguously determined by absorbance at 650 nm. An absorbance >0.100 was considered a positive indication of growth.

### Procedure

Both a 24-hour and a 7-day biofilm are prepared from *P. aeruginosa* (Examples 6a and 6b). A 24-hour biofilm is prepared from equal populations of *P. aeruginosa* and *K. pneumoniae* (Example 6c). These biofilms are then challenged with several oxidizing biocides. The 7-day biofilms were more difficult to eradicate than the 24-hour biofilms.

All of the MBEC determinations performed in Example 6 used a pH of 8.0 and a one hour challenge time for the MBEC determination. The results of the minimum biofilm eradication concentration (MBEC) determinations are shown in Table 4.

**Table 4 - MBEC Results for Biofilm Bacteria**

| Ex. # | 6a | 6b | 6c |
|---|---|---|---|
| Bacteria | *P. aeruginosa* | *P. aeruginosa* | *P. aeruginosa* and *K. pneumoniae* |
| film growth time | 24 hours | 7 days | 24 hours |
| | MBEC | MBEC | MBEC |
| BrCl | 3.8 ppm | 4.6 ppm | not tested |
| HOBr | 2.5 ppm | 7.6 ppm | 2.5 ppm |
| HOCl | 3.8 ppm | 21 ppm | 2.6 ppm |
| Br₂DMH^{a} | 1.4 ppm | 5 ppm | 2.4 ppm |
| BrClDMH^{b} | 2.4 ppm | 6.8 ppm | 2.3 ppm |
| Cl₃isocyanuric acid^{c} | 2.0 ppm | 22 ppm | 2.6 ppm |

| | | | |
|---|---|---|---|
| *a* Br₂DMH = 1,3-dibromo-5,5-dimethylhydantoin | | | |
| *b* BrClDMH = 1,3-bromochloro-5,5-dimethylhydantoin | | | |
| *c* Cl₃isocyanuric acid = trichloroisocyanuric acid | | | |

### EXAMPLE 7

### Efficacy of BrCl/Sodium Sulfamate Solutions versus Planktonic (solution) Bacteria

### Biocide Solutions

The sodium hypochlorite (NaOCl) solution is an aqueous solution with 5.25% available chlorine. The stock BrCl solution is prepared as in Example 4. Both the NaOCl solution and the BrCl solutions are diluted in a two fold series of dilutions in phosphate buffer at the desired pH for the minimum inhibitory concentration (MIC) tests (see below).

### Bacterial Cultures

Cultures of *E. coli, P. aeruginosa*, and *S. aureus* are prepared by growing 24-hour cultures of the respective bacteria.

### Minimum Inhibitory Concentration

The minimum inhibitory concentration (MIC) is defined as the highest dilution (lowest concentration) which shows complete deactivation of the bacteria. The MIC technique generally consists of growing identical 24-hour bacterial cultures and then challenging a portion of the culture with selected antibiotics and/or biocides. After a challenge time, the challenged portions of the cultures are placed in wells of growth media, and, after incubating overnight, the wells are checked for turbidity. Clear, transparent wells indicate complete deactivation of the bacteria. Conversely, turbidity (growth) indicates incomplete deactivation.

A 0.5 McFarland suspension from a culture is made for minimum inhibitory concentration (MIC) testing. After the challenge time, a 10 µL aliquot is removed to Letheen broth containing 0.1 % sodium thiosulfate. The mixture is incubated at 35 °C for 48 hours.

### Procedure

The suspensions from the cultures are each challenged separately with NaOCl and BrCl solutions at pH 7 (Examples 7a-c), and with BrCl solutions at pH 8.5 (Examples 7d-7f). 9.9 mL portions of the twofold-diluted biocide solutions were inoculated with 100µl of a 0.5 MacFarland suspension of a 24-hour culture. After the challenge time, a 10 µL aliquot is removed to Letheen broth containing 0.1% sodium thiosulfate. The mixture is incubated at 35°C for 48 hours.

All of the determinations performed in Example 7 used a ten minute challenge time for the MIC determination. The results of the minimum inhibitory concentration (MIC) determinations are shown in Table 5.

**Table 5 - MIC Results for Planktonic Bacteria**

| Ex. # | 7a | 7b | 7c | 7d | 7e | 7f |
|---|---|---|---|---|---|---|
| Bacteria | *E. coli* | *P. aeruginosa* | *S. aureus* | *E. coli* | *P. aeruginosa* | *S. aureus* |
| pH | 7 7 | 7 | 7 | 8.5 | 8.5 | 8.5 |
| | MIC | MIC | MIC | MIC | MIC | MIC |
| 11wt% BrCl | 16 ppm | 16 ppm | 16 ppm | 8 ppm | 16 ppm | 16 ppm |
| 5wt% NaOCl | 8 ppm | 16 ppm | - | - | - | - |

The preferred way of forming the above aqueous biocide compositions comprising water having in solution therein an active bromine content of at least about 100,000 ppm (wt/wt), and preferably from 145,000 ppm to 160,000 ppm (wt/wt) is to mix together (i) bromine chloride, and (ii) an aqueous solution of alkali metal salt of sulfamic acid, or (iii) water and an alkali metal salt of sulfamic acid, or (iv) water, an alkali metal base, and sulfamic acid, or (v) any combination of (ii), (iii), and (iv), and in relative proportions of such that the atom ratio of nitrogen to active bromine in said biocide composition is greater than 0.93, preferably greater than 1, and the pH of the biocide composition is at least 7 (*e*.*g*., in the range of 10 to 13.5), and preferably in the range of 12 or 12.5 to 13.5.

This invention has made it possible to provide an aqueous biocide composition having a pH of at least 7 and that comprises water having in solution (i) an active bromine content of at least about 100,000 ppm (wt/wt), and (ii) an atom ratio of nitrogen to active bromine of greater than 0.93, the nitrogen originating from sulfamic acid and/or an alkali metal salt thereof, and in which the composition (a) is devoid or essentially devoid of bromate, and (b) since its inception has been devoid or essentially devoid of bromate. By "devoid" of bromate is meant that using the test procedure described hereinafter the level of bromate, if any, is below a detectable amount. Similarly, by "essentially devoid" of bromate is meant that using the test procedure described hereinafter the presence of bromate is confirmed, but that the amount thereof is not more than 50 ppm (wt/wt).

The invention uses a composition comprising an aqueous solution containing a stable oxidizing bromine compound -- *i*.*e*., a stabilized active bromine content -- wherein the solution is free of detectable bromate. Preferably such composition from its inception is free of detectable amounts of bromate, or in other words, the solution contains at all times from its inception less than 50 ppm of bromate. The stabilized active bromine content of the compositions of this embodiment can be derived from bromine chloride and sulfamic acid or an alkali metal sulfamate such as sodium sulfamate or potassium sulfamate. The stable oxidizing bromine compound is of the type obtainable from bromine chloride or a mixture of bromine chloride and bromine, and sulfamic acid or an alkali metal sulfamate such as sodium sulfamate. When in the form of a concentrated solution, these compositions contain at least 100,000 ppm (wt/wt), *i*.*e*., at least 10 wt%, based on the total weight of the aqueous solution, and most preferably at least about 145,000 ppm (*e.g.*, in the range of 145,000 to 160,000 ppm (wt/wt) of active bromine content. Amounts above 160,000 ppm (wt/wt) are also within the scope of this invention. In other words, any concentration of the stabilized active bromine component(s) above about 160,000 ppm (wt/wt) that does not result in precipitate formation during storage or transportation of the concentrated solution under normal ambient temperature conditions constitute compositions of this invention. When used formicrobiological control, the concentrated solutions ofthis invention are mixed or diluted with, or introduced into, additional water, which typically is the water being treated for such microbiological control, so that the amount of active bromine in the water being treated for microbiological control is a microbiologically effective amount. The various compositions of the embodiments referred to in this paragraph preferably additionally contain dissolved chloride ion, most preferably in the presence of a stoichiometric excess of alkali metal cation, such as sodium or potassium cations. In contrast to certain other alkali metal salts, the alkali metal chloride salts have high solubilities in the aqueous medium of the concentrates of this invention, and thus pose no problem with respect to precipitate formation during storage, transportation, or use. In addition, the dissolved alkali metal chloride in the solutions of this invention minimize the extent to which oxygen or air becomes dissolved in the concentrated solutions.

Although not mandatory, it is preferred that from the inception of theirproduction the compositions used in this invention are and remain at all times free of peroxides.

Still other embodiments used in this invention include the following:
1) A concentrated biocidal composition containing sulfamate-stabilized bromonium ion, such composition (i) from its inception, having a pH in excess of 8 and (ii) having greater than about 10 wt% bromonium ion present, measured as Br₂, such wt% being based on the total weight of the composition.
2) A concentrated biocidal composition containing sulfamate-stabilized bromonium ion, such composition (i) containing up to about 16 wt% bromonium ion, measured as Br₂, such wt% being based upon the total weight of the composition, (ii) from its inception, being free of detectable amounts of bromate ion, and (iii) from its inception, having a pH greater than 10.
3) A concentrated biocidal composition containing sulfamate-stabilized bromonium ion, such composition (i) containing at least about 10 wt% bromonium ion, measured as Br₂, such wt% being based upon the total weight of the composition, (ii) having a pH greater than 10 and (iii) containing no detectable bromate ion.
4) A concentrated biocidal composition containing stabilized oxidizing halogen obtained by the reaction of BrCl and ^{⊖}SO₃NH₂, such composition (i) having up to 16 wt% bromonium ion, measured as Br₂, such wt% being based upon the total weight of the composition, and (ii) having a pH greater than 10.
5) A concentrated biocidal composition containing stabilized oxidizing halogen obtained by the reaction of BrCl and ^{⊖}SO₃NH₂, such composition having a pH greater than 10.
6) A concentrated biocidal composition containing stabilized oxidizing halogen obtained by the reaction of BrCl and ^{⊖}SO₃NH₂, such composition containing at least about 10 wt% bromonium ion, measured as Br₂, such wt% being based upon the total weight of the composition.
7) A concentrated biocidal composition containing at least about 10 wt% ⊖SO₃NH₂ stabilized non-BrO^{⊖}-oxidizing halogen.
8) A concentrated biocidal composition containing stabilized non-BrO^{⊖}-oxidizing halogen, such composition having a pH greater than 10.
9) An aqueous mixture containing stabilized oxidizing halogen and having a pH between 7 and 8.
10) An aqueous biocide composition having a pH of at least 7 and that comprises water having in solution therein (i) an active bromine content of at least about 100,000 ppm (wt/wt), and (ii) a sulfamate content in an amount such that the atom ratio of nitrogen to active bromine in said biocide composition is greater than 0.93, and wherein said composition is devoid or essentially devoid of bromate, and since its inception has been devoid or essentially devoid of bromate.
11) A composition according to 10) above wherein said atom ratio is greater than 1, wherein said pH is in the range of from 12 to about 13.5.
12) A composition comprising an aqueous solution containing a stable oxidizing bromine compound wherein the solution is free of detectable bromate.
13) A composition according to 12) above wherein from its inception said composition is free of detectable amounts of bromate.
14) A concentrated biocidal composition containing a stabilized oxidizing halogen which may be obtained from bromine chloride or a combination of bromine chloride and bromine, and sulfamic acid or an alkali metal sulfamate, said composition being free of detectable amounts of bromate ion and having greater than about 100,000 ppm (wt/wt) bromonium ion present, measured as Br₂.
15) A composition according to 14) above wherein said stabilized oxidizing halogen is obtainable from bromine chloride or a combination of bromine chloride and bromine, and sodium sulfamate.
16) A composition according to 14) above wherein the amount ofbromonium ion present, measured as Br₂, is at least about 145,000 ppm (wt/wt).
17) A composition according to 14) above wherein the amount ofbromonium ion present, measured as Br₂, is in the range of 145,000 to 160,000 ppm (wt/wt).
Preferably, but not necessarily, the composition of 1), 2), 3), 7), 8), 9), 10), 11), 12), or 13) immediately above are further characterized by comprising chloride ion in solution therein.

In each of the above embodiments used in this invention, the atom ratio of nitrogen to active bromine is preferably in the range of 1.1 to 1.5, and more preferably in the range of from 1.35 to 1.5. Still higher ratios can be employed, if desired.

A preferred alkali metal salt of sulfamic acid, and a preferred alkali metal base used in forming such salt are, respectively, potassium sulfamate and a potassium base such as KOH. Most preferred are, respectively, sodium sulfamate, and a sodium base such as NaOH.

One desirable way of accomplishing the mixing of the reactants when producing the concentrated liquid biocide formulations used in this invention comprises concurrently introducing (a) bromine chloride and (b) an aqueous solution of alkali metal salt of sulfamic acid into a reaction zone, such as a reactor or other reaction vessel, and having the pH of the resulting solution at least at 7 (*e*.*g*., in the range of 10 to 13.5), and preferably in the range of 12 or 12.5 to 13.5. As noted above, the proportions of (a) and (b) used are such that (i) the active bromine content of the solution is at least about 100,000 ppm (wt/wt), preferably from 145,000 to 160,000 ppm (wt/wt), and (ii) the atom ratio of nitrogen to active bromine from (a) and (b) is greater than 0.93, preferably greater than 1.

One of the features of this invention is that aqueous iocide compositions are used that, even though unpurified, are devoid or are essentially devoid of bromate. In other words, if any bromate is present, the amount thereof as determined by use of the test procedure described hereafter is such that the concentrated aqueous biocide compositions of this invention contain bromate in an amount of up to and including (*i*.*e*., no greater than) 50 ppm (wt/wt) based on the total weight of the concentrated aqueous biocidal composition. In fact, inpreferred concentrated aqueous biocide compositions used in this invention this bromate content is in the range of from 0 to about 40 ppm (wt/wt) as determined using such test procedure.

As is known in the art, bromate is a very undesirable component of aqueous systems. For example, U.S. Pat. No. 5,922,745 points out that in 1995 the United States Environmental Protection Agency published a paper identifying some health concerns relevant to bromate formation (G. Amy, *et al*., *Water Supply,* **1995,** 13(1), 157), and that in the same year animal carcinogenesis was linked to the presence of low levels of bromate in drinking water (J. K. Falwell, and G. O'Neill, *Water Supply*, **1995,** 13(1), 29). While some prior processing achieved reductions in the amount of bromate formed when producing stabilized aqueous bromine-containing biocides, there has remained a need for still further reductions in the amount of bromate present in such biocides. Pursuant to this invention, such further reductions have been made possible. Furthermore, because of this invention, it is now possible to form a concentrated aqueous biocide composition having an active bromine content of at least about 100,000 ppm (wt/wt), and preferably in the range of 145,000 to 160,000 ppm (wt/wt), which not only is devoid or essentially devoid of bromate, but which since its inception has been devoid or essentially devoid of bromate. Thus in all stages in the production, handling, storage, transportation, and use of such compositions there is a reduced possibility of exposure to bromate. So far as is known, it has not been possible to achieve such results prior to this invention. Moreover, the water treated pursuant to this invention by addition thereto of an effective biocidal amount of active bromine results in a substantial dilution since, in general, on a wt/wt basis dosages in the treated water in the range of 0.5 to 20 parts per million of bromine (expressed as Br₂) and preferably in the range of 4 to 10 parts per million of bromine (expressed as Br₂) in the aqueous medium being treated for biocidal and/or biofilm control will usually suffice. This in turn means that the very small amount of bromate, if any, present in the concentrated aqueous solution of this invention is sharply reduced by orders ofmagnitude in the water being treated while achieving the microbiological control for which the composition is being used.

Still another feature of this invention is that the invention has made it possible to form a concentrated aqueous biocide composition having an active bromine content of at least about 100,000 ppm (wt/wt), which not only is devoid or essentially devoid of bromate, but which, since its inception, has always had a pH of greater than 8, and preferably in the range of 12 to 13.5. Thus it is not necessary to first reduce pH during processing and thereafter to increase the pH of the product solution. Avoidance of such pH adjustments materially simplifies the operations involved in the production of the resultant concentrated aqueous biocide composition of this invention. In addition, when the composition has been maintained at a pH of at least 12 or 13, *e.g.,* in the range of 12 to about 13.5, from its inception, the possibility of bromate formation caused by exposure of the composition to reduced pH is virtually eliminated.

A further advantage of this invention is that it is unnecessary to produce the concentrated aqueous biocidecompositions used in this invention by use of powerful oxidants such as ozone, peroxides, or other peroxygen compounds which are known to possess undesirable, and indeed, hazardous characteristics.

The analytical test procedure to be used for determining the concentration, if any, of bromate in the compositions of this invention is an ion chromatography procedure in which UV detection is employed. The equipment required for the conduct of this procedure is as follows:
a) Ion Chromatograph - Dionex DX-500 or equivalent, equipped with a UV detector and autosampler.
b) Data Acquisition and Analysis Device - VAX MULTICHROM or equivalent chromatography data collection and processing system.
c) Ion Chromatographic Column - Dionex IonPac AG9-HC guard column (p/n 051791) in-line with a Dionex IonPac AS9-HC column (p/n 051786).
d) Volumetric Pipettes - any standard type of suitable volume.
e) Autosampler Vials - 1-mL with caps.
f) Volumetric Flasks - 100-mL.
g) Syringe - 5-cc plastic syringe.
h) Pretreatment Cartridge - OnGuard-H from Dionex (p/n 039596).

The chemicals required for use in the procedure are as follows:
a) Water - Deionized water with a specific resistivity of 17.8 megohm-cm or greater.
b) Sodium Carbonate - "Baker Analyzed"® reagent grade or equivalent.
c) Sodium Bromate - "Baker Analyzed"® reagent grade or equivalent.

The conditions used for the ion chromatograph are as follows:
- Eluent:: 4.5 millimoles (mM) sodium carbonate
- Flow-rate: 1.0 mL/minute
- Injection volume: 50 microliter (µL)
- Detector Range: UV at 210 nanometers (nm)

The eluent is prepared by dissolving 0.4770 gram of the sodium carbonate in 1 liter of the deionized water. These are mixed well and the solution is filtered through a 0.2 IC compatible filter to degas the solution. The concentrated bromate standard solution is prepared by weighing 0.1180 gram ± 0.001 gram of the sodium bromate into a 100-mL volumetric flask and diluting to volume with deionized water. This produces a solution containing 1,000 micrograms per milliliter of bromate. This concentrated bromate solution should be made fresh at least weekly. The bromate working standard solution is prepared by pipetting 100-microliters of the concentrated bromate standard solution into a 100-mL volumetric flask and filling the flask to volume with deionized water. The solution is mixed well, and yields a standard concentration of 1.0 microgram per milliliter of bromate.

The detailed procedure used for conducting the analysis of an aqueous solution of this invention involves the following steps:
a) Weigh 0.25 gram of the sample solution into a 100-mL volumetric flask. Fill to volume with deionized water and mix well.
b) Flush the OnGuard cartridge with 2-mL of deionized water.
c) . Load 5-mL of the sample into the syringe attached to the OnGuard cartridge, pass through at a flow rate of 2 milliliters per minute, and discard the first 3 milliliters: Collect into a 1-mL autosampler vial and cap for analysis.
d) Analyze the samples, making duplicate injections, using the Ion Chromatograph instrument conditions given above.

The calculations involved in the procedure are as follows:
a) Calibration Standard: For bromate, calculate a response factor as follows: R = A/C where R is the response factor, A is the average area counts (2 injections), and C is concentration in micrograms per milliliter (µg/mL).
b) Samples: ppm bromate = A/(R x W) where A is the average area of sample peak (2 injections), R is the response factor, and W is the weight of the sample in grams.

Even though the claims hereinafter may refer to substances, components and/or ingredients in the present tense ("comprises" or "is"), the reference is to the substance, component or ingredient as it existed at the time just before it was first contacted, blended or mixed with one or more other substances, components and/or ingredients, or if formed in solution, as it would exist if not formed in solution, all in accordance with the present disclosure. It matters not that a substance, component or ingredient may have lost its original identity through a chemical reaction or transformation during the course of such contacting, blending, mixing, or *in situ* formation, if conducted in accordance with this disclosure.

## Claims

1. A method for disinfecting a surface which comprises applying to said surface a concentrated liquid biocide active bromine-containing composition formed from (a) bromine chloride or alkali metal dichlorohypobromite and (b) an aqueous solution of alkali metal salt of sulfamic acid having a pH of at least 7, in amounts such that (i) the active bromine content of said composition is at least about 100,000 ppm (wt/wt), and (ii) when (a) is bromine chloride, the atom ratio of nitrogen to active bromine in said composition is greater than 0.93, and when (a) is alkali metal dichlorohypobromite, the atom ratio of nitrogen to active bromine in said composition is greater than 1, wherein said surface is a kitchen counter, a bathroom counter, a wall or a floor and wherein said application to said surface is by pouring, spraying or applying with an applicator.

2. A method according to Claim I wherein said application is effected by applying with said applicator and wherein said applicator is a cloth, a sponge, a paper towel or a mop.

3. A method according to Claim I wherein bromine chloride is used as (a).

4. A method according to Claim 3 wherein said atom ratio is greater than 1.

5. A method according to Claim 1 wherein said aqueous solution of alkali metal salt of sulfamic acid is an aqueous solution of the sodium salt of sulfamic acid.

6. A method according to Claim 1 wherein said aqueous solution of alkali metal salt of sulfamic acid is formed by mixing together in water (i) sulfamic acid and/or an alkali metal salt of sulfamic acid, and (ii) alkali metal base in proportions such that an aqueous solution of alkali metal salt of sulfamic acid is formed having a pH of at least 7.

7. A method according to Claim 6 wherein said alkali metal base is a sodium base such that said aqueous solution of alkali metal salt of sulfamic acid is an aqueous solution of the sodium salt of sulfamic acid.

8. A method according to Claim 6 wherein, at the time (i) and (ii) are mixed together, the alkali metal base is in the form of a preformed aqueous solution of alkali metal base, and (i) is sulfamic acid in the form of a preformed slurry of sulfamic acid in water.

9. A method according to Claim 3 wherein the concentrated liquid biocide composition further comprises an alkali metal chloride.

10. A method according to Claim 3 wherein the concentrated liquid biocide composition further comprises an alkali metal bromide.

11. A method according to Claim 9 or 10 wherein the alkali metal is sodium.

12. A method according to Claim 1 wherein said pH is in the range of 7 to about 13.5.

13. A method according to Claim 1 wherein alkali metal dichlorohypobromite is used as (a).

14. A method according to Claim 13 wherein said alkali metal dichlorohypobromite is a preformed aqueous solution of alkali metal dichlorohypobromite, and said aqueous solution of alkali metal salt of sulfamic acid is a preformed aqueous solution of the sodium salt of sulfamic acid.

15. A method according to Claim 14 wherein said preformed aqueous solution of alkali metal dichlorohypobromite is a preformed aqueous solution of sodium dichlorohypobromite.

16. A method of sanitizing a body of water which comprises introducing into said body of water a concentrated liquid biocide composition formed from (a) bromine chloride or alkali metal dichlorohypobromite and (b) an aqueous solution of alkali metal salt of sulfamic acid having a pH of at least 7, in amounts such that (i) the active bromine content of said composition is at least about 100,000 ppm (wt/wt) and (ii) the atom ratio of nitrogen to active bromine in said composition is greater than 0.93 when (a) is bromine chloride and greater than 1 when (a) is alkali metal dichlorohypobromite, and wherein said concentrated liquid biocide composition is introduced directly into said body of water all at once so that the addition of said concentrated liquid biocide composition to said body of water yields a concentration of biocide in the body of water in the range of from 2 to 10 milligrams per liter of total available halogen, expressed as Cl₂ .

17. A method of sanitizing a body of water which comprises introducing into said body of water a concentrated liquid biocide composition formed from (a) bromine chloride or alkali metal dichlorohypobromite and (b) an aqueous solution of alkali metal salt of sulfamic acid having a pH of at least 7, in amounts such that (i) the active bromine content of said composition is at least about 100,000 ppm (wt/wt) and (ii) the atom ratio of nitrogen to active bromine in said composition is greater than 0.93 when (a) is bromine chloride and greater than 1 when (a) is alkali metal dichlorohypobromite, and wherein said concentrated liquid biocide composition is introduced into said body of water slowly over time so that the addition of said concentrated liquid biocide composition to said body of water yields a concentration of biocide in the body of water in the range of from 2 to 10 milligrams per liter of total available halogen, expressed as Cl₂.

18. A method according to Claim 17 wherein said concentrated liquid biocide composition is introduced into said body of water via an apparatus through which the water is circulated.

19. A method according to Claim 16 or 17 wherein the total available halogen, expressed as Cl₂, is in the range of from 2 to 5 milligrams per liter.

20. A method according to Claim 16 or 17 wherein the concentrated liquid biocide composition is introduced into said body of water as required, such that in the range of from 2 to 10 milligrams per liter of total available halogen, expressed as Cl₂, is maintained within said body of water.

21. A method according to Claim 20 wherein the total available halogen, expressed as Cl₂, is in the range of from 2 to 5 milligrams per liter.

22. A method according to Claim 16 or 17 wherein bromine chloride is used as (a).

23. A method according to Claim 22 wherein said atom ratio is greater than 1.

24. A method according to Claim 22 wherein said aqueous solution of alkali metal salt of sulfamic acid is an aqueous solution of the sodium salt of sulfamic acid.

25. A method according to Claim 22 wherein said aqueous solution of alkali metal salt of sulfamic acid is formed by mixing together in water (i) sulfamic acid and/or an alkali metal salt of sulfamic acid, and (ii) alkali metal base in proportions such that an aqueous solution of alkali metal salt of sulfamic acid is formed having a pH of at least 7.

26. A method according to Claim 25 wherein said alkali metal base is a sodium base such that said aqueous solution of alkali metal salt of sulfamic acid is an aqueous solution of the sodium salt of sulfamic acid.

27. A method according to Claim 25 wherein, at the time (i) and (ii) are mixed together, the alkali metal base is in the form of a preformed aqueous solution of alkali metal base, and (i) is sulfamic acid in the form of a preformed slurry of sulfamic acid in water.

28. A method according to Claim 22 wherein the concentrated liquid biocide composition further comprises an alkali metal chloride.

29. A method according to Claim 22 wherein the concentrated liquid biocide composition further comprises an alkali metal bromide.

30. A method according to Claim 28 wherein the alkali metal is sodium.

31. A method according to Claim 29 wherein the alkali metal is sodium.

32. A method according to Claim 16 or 17 wherein said pH is in the range of from 7 to about 13.5.

33. A method according to Claim 16 or 17 wherein alkali metal dichlorohypobromite is used as (a).

34. A method according to Claim 33 wherein said alkali metal dichlorohypobromite is a preformed aqueous solution of alkali metal dichlorohypobromite, and said aqueous solution of alkali metal salt of sulfamic acid is a preformed aqueous solution of the sodium salt of sulfamic acid.

35. A method according to Claim 34 wherein said preformed aqueous solution of alkali metal dichlorohypobromite is a preformed aqueous solution of sodium dichlorohypobromite.

36. A non-therapeutical method of eradicating biofilm which comprises contacting the biofilm with an aqueous medium containing a biofilm eradicating concentration of a biocide composition formed from (a) bromine chloride and (b) an alkali metal salt of sulfamic acid in water in amounts such that the atom ratio of nitrogen to active bromine in said composition is greater than 0.93.

37. A method according to Claim 36 wherein the biofilm comprises *P*. *aeruginosa.*

38. A method according to Claim 37 wherein said biofilm further comprises *K. pneumoniae*.

39. A non-therapeutical method of killing bacteria comprising *E. coli, P. aeruginosa*, or *S. aureus,* which method comprises contacting the bacteria with an aqueous medium containing a bacteria killing concentration of an active bromine-containing biocide composition formed from (a) bro-mine chloride and (b) an alkali metal salt of sulfamic acid in water in amounts such that the atom ratio of nitrogen to active bromine in said composition is greater than 0.93.

40. A method according to Claim 3 wherein said active bromine-containing composition is diluted with water before applying said composition to said surface.

## Revendications

1. Procédé de désinfection d'une surface qui comprend une application à ladite surface d'une composition biocide liquide concentrée contenant du brome actif formée à partir (a) de chlorure de brome ou de dichlorohypobromite de métal alcalin et (b) d'une solution aqueuse de sel de métal alcalin d'acide sulfamique présentant un pH d'au moins 7, en des quantités telles que (i) la teneur en brome actif de ladite composition est d'au moins environ 100 000 ppm (poids/poids), et (ii) lorsque (a) est le chlorure de brome, le rapport atomique de l'azote au brome actif dans ladite composition est supérieur à 0,93, et lorsque (a) est un dichlorohypobromite de métal alcalin, le rapport atomique de l'azote au brome actif dans ladite composition est supérieur à 1, dans lequel ladite surface est un plan de travail de cuisine, un plan de toilette de salle de bain, un mur ou un sol et dans lequel ladite application à ladite surface est effectuée en répandant, en pulvérisant ou en appliquant au moyen d'un applicateur.

2. Procédé selon la revendication 1 dans lequel ladite application est effectuée en appliquant avec ledit applicateur et dans lequel ledit applicateur est un chiffon, une éponge, un papier absorbant ou un balai à laver.

3. Procédé selon la revendication 1 dans lequel le chlorure de brome est utilisé à titre de composant (a).

4. Procédé selon la revendication 3 dans lequel ledit rapport atomique est supérieur à 1.

5. Procédé selon la revendication 1 dans lequel ladite solution aqueuse de sel de métal alcalin d'acide sulfamique est une solution aqueuse du sel de sodium d'acide sulfamique.

6. Procédé selon la revendication 1 dans lequel ladite solution aqueuse de sel de métal alcalin d'acide sulfamique est formée en mélangeant ensemble dans l'eau (i) de l'acide sulfamique et/ou un sel de métal alcalin d'acide sulfamique, et (ii) une base de métal alcalin, en des proportions telles qu'une solution aqueuse de sel de métal alcalin d'acide sulfamique, présentant un pH d'au moins 7, est formée.

7. Procédé selon la revendication 6 dans lequel ladite base de métal alcalin est une base de sodium telle que ladite solution aqueuse de sel de métal alcalin d'acide sulfamique est une solution aqueuse du sel de sodium d'acide sulfamique.

8. Procédé selon la revendication 6 dans lequel, au moment où (i) et (ii) sont mélangés ensemble, la base de métal alcalin est sous la forme d'une solution aqueuse de base de métal alcalin formée au préalable, et (i) est l'acide sulfamique sous la forme d'une suspension épaisse d'acide sulfamique dans l'eau formée au préalable.

9. Procédé selon la revendication 3 dans lequel la composition biocide liquide concentrée comprend de plus un chlorure de métal alcalin.

10. Procédé selon la revendication 3 dans lequel la composition biocide liquide concentrée comprend de plus un bromure de métal alcalin.

11. Procédé selon la revendication 9 ou 10 dans lequel le métal alcalin est le sodium.

12. Procédé selon la revendication 1 dans lequel ledit pH est situé dans la gamme de 7 à environ 13,5.

13. Procédé selon la revendication 1 dans lequel un dichlorohypobromite de métal alcalin est utilisé à titre de composant (a).

14. Procédé selon la revendication 13 dans lequel ledit dichlorohypobromite de métal alcalin est une solution aqueuse de dichlorohypobromite de métal alcalin formée au préalable, et ladite solution aqueuse de sel de métal alcalin d'acide sulfamique est une solution aqueuse du sel de sodium d'acide sulfamique formée au préalable.

15. Procédé selon la revendication 14 dans lequel ladite solution aqueuse de dichlorohypobromite de métal alcalin formée au préalable est une solution aqueuse de dichlorohypobromite de sodium formée au préalable.

16. Procédé d'assainissement d'une masse d'eau qui comprend l'introduction dans ladite masse d'eau d'une composition biocide liquide concentrée formée à partir (a) de chlorure de brome ou de dichlorohypobromite de métal alcalin et (b) d'une solution aqueuse de sel de métal alcalin d'acide sulfamique présentant un pH d'au moins 7, en des quantités telles que (i) la teneur en brome actif de ladite composition est d'au moins environ 100 000 ppm (poids/poids), et (ii) le rapport atomique de l'azote au brome actif dans ladite composition est supérieur à 0,93 lorsque (a) est le chlorure de brome et est supérieur à 1 lorsque (a) est un dichlorohypobromite de métal alcalin, et dans lequel ladite composition biocide liquide concentrée est introduite directement en une seule fois dans ladite masse d'eau de sorte que l'addition de ladite composition biocide liquide concentrée à ladite masse d'eau donne une concentration en biocide dans la masse d'eau comprise dans la gamme de 2 à 10 milligrammes par litre d'halogène disponible total, exprimée sous forme de Cl₂.

17. Procédé d'assainissement d'une masse d'eau qui comprend l'introduction dans ladite masse d'eau d'une composition biocide liquide concentrée formée à partir (a) de chlorure de brome ou de dichlorohypobromite de métal alcalin et (b) d'une solution aqueuse de sel de métal alcalin d'acide sulfamique présentant un pH d'au moins 7, en des quantités telles que (i) la teneur en brome actif de ladite composition est d'au moins environ 100 000 ppm (poids/poids), et (ii) le rapport atomique de l'azote au brome actif dans ladite composition est supérieur à 0,93 lorsque (a) est le chlorure de brome et est supérieur à 1 lorsque (a) est un dichlorohypobromite de métal alcalin, et dans lequel ladite composition biocide liquide concentrée est introduite lentement au cours du temps dans ladite masse d'eau de sorte que l'addition de ladite composition biocide liquide concentrée à ladite masse d'eau donne une concentration en biocide dans la masse d'eau comprise dans la gamme de 2 à 10 milligrammes par litre d'halogène disponible total, exprimé sous forme de Cl₂.

18. Procédé selon la revendication 17 dans lequel ladite composition biocide liquide concentrée est introduite dans ladite masse d'eau par l'intermédiaire d'un appareil au travers duquel l'eau est en circulation.

19. Procédé selon la revendication 16 ou 17 dans lequel l'halogène disponible total, exprimé sous forme de Cl₂, est compris dans la gamme de 2 à 5 milligrammes par litre.

20. Procédé selon la revendication 16 ou 17 dans lequel la composition biocide liquide concentrée est introduite dans ladite masse d'eau comme requis, de sorte que la gamme de 2 à 10 milligrammes par litre l'halogène disponible total, exprimé sous forme de Cl₂, soit conservée dans ladite masse d'eau.

21. Procédé selon la revendication 20 dans lequel l'halogène disponible total, exprimé sous forme de Cl₂, est compris dans la gamme de 2 à 5 milligrammes par litre.

22. Procédé selon la revendication 16 ou 17 dans lequel le chlorure de brome est utilisé à titre de composant (a).

23. Procédé selon la revendication 22 dans lequel ledit rapport atomique est supérieur à 1.

24. Procédé selon la revendication 22 dans lequel ladite solution aqueuse de sel de métal alcalin d'acide sulfamique est une solution aqueuse du sel de sodium d'acide sulfamique.

25. Procédé selon la revendication 22 dans lequel ladite solution aqueuse de sel de métal alcalin d'acide sulfamique est formée en mélangeant ensemble dans l'eau (i) de l'acide sulfamique et/ou un sel de métal alcalin d'acide sulfamique, et (ii) une base de métal alcalin en des proportions telles qu'une solution aqueuse de sel de métal alcalin d'acide sulfamique, présentant un pH d'au moins 7, est formée.

26. Procédé selon la revendication 25 dans lequel ladite base de métal alcalin est une base de sodium telle que ladite solution aqueuse de sel de métal alcalin d'acide sulfamique est une solution aqueuse du sel de sodium d'acide sulfamique.

27. Procédé selon la revendication 25 dans lequel, au moment où (i) et (ii) sont mélangés ensemble, la base de métal alcalin est sous la forme d'une solution aqueuse de base de métal alcalin formée au préalable, et (i) est l'acide sulfamique sous la forme d'une suspension épaisse d'acide sulfamique dans l'eau formée au préalable.

28. Procédé selon la revendication 22 dans lequel la composition biocide liquide concentrée comprend de plus un chlorure de métal alcalin.

29. Procédé selon la revendication 22 dans lequel la composition biocide liquide concentrée comprend de plus un bromure de métal alcalin.

30. Procédé selon la revendication 28 dans lequel le métal alcalin est le sodium.

31. Procédé selon la revendication 29 dans lequel le métal alcalin est le sodium.

32. Procédé selon la revendication 16 ou 17 dans lequel ledit pH est situé dans la gamme de 7 à environ 13,5.

33. Procédé selon la revendication 16 ou 17 dans lequel un dichlorohypobromite de métal alcalin est utilisé à titre de composant (a).

34. Procédé selon la revendication 33 dans lequel ledit dichlorohypobromite de métal alcalin est une solution aqueuse de dichlorohypobromite de métal alcalin formée au préalable, et ladite solution aqueuse de sel de métal alcalin d'acide sulfamique est une solution aqueuse du sel de sodium d'acide sulfamique formée au préalable.

35. Procédé selon la revendication 34 dans lequel ladite solution aqueuse de dichlorohypobromite de métal alcalin formée au préalable est une solution aqueuse de dichlorohypobromite de sodium formée au préalable.

36. Procédé non thérapeutique d'élimination d'un biofilm qui comprend la mise en contact du biofilm avec un milieu aqueux contenant une concentration permettant l'élimination du biofilm d'une composition biocide formée à partir (a) de chlorure de brome et (b) d'un sel de métal alcalin d'acide sulfamique dans l'eau en des quantités telles que le rapport atomique de l'azote au brome actif dans ladite composition est supérieur à 0,93.

37. Procédé selon la revendication 36 dans lequel le biofilm comprend *P. aeruginosa*.

38. Procédé selon la revendication 37 dans lequel ledit biofilm comprend de plus *K. pneumoniae*.

39. Procédé non thérapeutique pour tuer des bactéries comprenant *E*. *coli, P. aeruginosa*, ou *S. aureus*, lequel procédé comprend la mise en contact des bactéries avec un milieu aqueux contenant une concentration permettant de tuer les bactéries d'une composition biocide contenant du brome actif formée à partir de (a) du chlorure de brome et (b) un sel de métal alcalin d'acide sulfamique dans l'eau en des quantités telles que le rapport atomique de l'azote au brome actif dans ladite composition est supérieur à 0,93.

40. Procédé selon la revendication 3 dans lequel ladite composition contenant du brome actif est diluée à l'eau avant application de ladite composition à ladite surface.

## Patentansprüche

1. Verfahren zum Desinfizieren einer Oberfläche, bei dem auf die Oberfläche eine konzentrierte, flüssige, biozide, aktives Brom enthaltende Zusammensetzung, die aus (a) Bromchlorid oder Alkalimetalldichlorhypobromit und (b) einer wässrigen Lösung von Alkalimetallsalz von Sulfaminsäure mit einem pH-Wert von mindestens 7 gebildet worden ist, in solchen Mengen aufgebracht wird, dass (i) der Gehalt der Zusammensetzung an aktivem Brom mindestens etwa 100 000 ppm (Gew./Gew.) beträgt und (ii), wenn (a) Bromchlorid ist, das Atomverhältnis von Stickstoff zu aktivem Brom in der Zusammensetzung größer als 0,93 ist, und, wenn (a) Alkalimetalldichlorhypobromit ist, das Atomverhältnis von Stickstoff zu aktivem Brom in der Zusammensetzung größer als 1 ist, wobei die Oberfläche eine Küchentheke, ein Badezimmerwaschtisch, eine Wand oder ein Fußboden ist und wobei die Aufbringung auf die Oberfläche durch Gießen, Sprühen oder Aufbringen mit einem Applikator erfolgt.

2. Verfahren nach Anspruch 1, bei dem die Aufbringung durch Aufbringen mit dem Applikator bewirkt wird und der Applikator ein Tuch, ein Schwamm, ein Papierhandtuch oder ein Mopp ist.

3. Verfahren nach Anspruch 1, bei dem als (a) Bromchlorid verwendet wird.

4. Verfahren nach Anspruch 3, bei dem das Atomverhältnis größer als 1 ist.

5. Verfahren nach Anspruch 1, bei dem die wässrige Lösung des Alkalimetallsalzes von Sulfaminsäure eine wässrige Lösung des Natriumsalzes von Sulfaminsäure ist.

6. Verfahren nach Anspruch 1, bei dem die wässrige Lösung des Alkalimetallsalzes von Sulfaminsäure gebildet wird, indem in Wasser (i) Sulfaminsäure und/oder Alkalimetallsalz von Sulfaminsäure und (ii) Alkalimetallbase in solchen Proportionen zusammengemischt werden, dass eine wässrige Lösung des Alkalimetallsalzes von Sulfaminsäure mit einem pH-Wert von mindestens 7 gebildet wird.

7. Verfahren nach Anspruch 6, bei dem die Alkalimetallbase eine Natriumbase ist, so dass die wässrige Lösung des Alkalimetallsalzes von Sulfaminsäure eine wässrige Lösung des Natriumsalzes von Sulfaminsäure ist.

8. Verfahren nach Anspruch 6, bei dem zu dem Zeitpunkt, wenn (i) und (ii) miteinander gemischt werden, die Alkalimetallbase in Form einer zuvor gebildeten wässrigen Lösung der Alkalimetallbase vorliegt und (i) Sulfaminsäure in Form einer zuvor gebildeten Aufschlämmung von Sulfaminsäure in Wasser vorliegt.

9. Verfahren nach Anspruch 3, bei dem die konzentrierte flüssige Biozidzusammensetzung ferner Alkalimetallchlorid umfasst.

10. Verfahren nach Anspruch 3, bei dem die konzentrierte flüssige Biozidzusammensetzung ferner Alkalimetallbromid umfasst.

11. Verfahren nach Anspruch 9 oder 10, bei dem das Alkalimetall Natrium ist.

12. Verfahren nach Anspruch 1, bei dem der pH-Wert im Bereich von 7 bis etwa 13,5 liegt.

13. Verfahren nach Anspruch 1, bei dem als (a) Alkalimetalldichlorhypobromit verwendet wird.

14. Verfahren nach Anspruch 13, bei dem das Alkalimetalldichlorhypobromit eine zuvor gebildete wässrige Lösung von Alkalimetalldichlorhypobromit ist und die wässrige Lösung von Alkalimetallsalz von Sulfaminsäure eine zuvor gebildete wässrige Lösung des Natriumsalzes von Sulfaminsäure ist.

15. Verfahren nach Anspruch 14, bei dem die zuvor gebildete wässrige Lösung des Alkalimetalldichlorhyporbromits eine zuvor gebildete wässrige Lösung von Natriumdichlorhypobromit ist.

16. Verfahren zum Entkeimen eines Wasserkörpers, bei dem in den Wasserkörper eine konzentrierte flüssige Biozidzusammensetzung, die aus (a) Bromchlorid oder Alkalimetalldichlorhypobromit und (b) einer wässrigen Lösung von Alkalimetallsalz von Sulfaminsäure mit einem pH-Wert von mindestens 7 gebildet worden ist, in solchen Mengen eingebracht wird, dass (i) der Gehalt der Zusammensetzung an aktivem Brom mindestens etwa 100 000 ppm (Gew./Gew.) beträgt und (ii) das Atomverhältnis von Stickstoff zu aktivem Brom in der Zusammensetzung größer als 0,93 ist, wenn (a) Bromchlorid ist, und größer als 1 ist, wenn (a) Alkalimetalldichlorhyprobromit ist, und bei dem die konzentrierte flüssige Biozidzusammensetzung direkt auf einmal in den Wasserkörper eingebracht wird, so dass die Zugabe der konzentrierten flüssigen Biozidzusammensetzung in den Wasserkörper eine Biozidkonzentration in dem Wasserkörper im Bereich von 2 bis 10 Milligramm an insgesamt verfügbarem Halogen, ausgedrückt als Cl₂, pro Liter ergibt.

17. Verfahren zum Entkeimen eines Wasserkörpers, bei dem in den Wasserkörper eine konzentrierte flüssige Biozidzusammensetzung, die aus (a) Bromchlorid oder Alkalimetalldichlorhypobromit und (b) einer wässrigen Lösung von Alkalimetallsalz von Sulfaminsäure mit einem pH-Wert von mindestens 7 gebildet worden ist, in solchen Mengen eingebracht wird, dass (i) der Gehalt der Zusammensetzung an aktivem Brom mindestens etwa 100 000 ppm (Gew./Gew.) beträgt und (ii) das Atomverhältnis von Stickstoff zu aktivem Brom in der Zusammensetzung größer als 0,93 ist, wenn (a) Bromchlorid ist, und größer als 1 ist, wenn (a) Alkalimetalldichlorhyprobromit ist, und bei dem die konzentrierte flüssige Biozidzusammensetzung langsam im Zeitverlauf in den Wasserkörper eingebracht wird, so dass die Zugabe der konzentrierten flüssigen Biozidzusammensetzung in den Wasserkörper eine Biozidkonzentration in dem Wasserkörper im Bereich von 2 bis 10 Milligramm an insgesamt verfügbarem Halogen, ausgedrückt als Cl₂, pro Liter ergibt.

18. Verfahren nach Anspruch 17, bei dem die konzentrierte flüssige Biozidzusammensetzung durch eine Vorrichtung in den Wasserkörper eingebracht wird, durch die das Wasser zirkuliert wird.

19. Verfahren nach Anspruch 16 oder 17, bei dem das gesamte verfügbare Halogen, ausgedrückt als Cl₂, im Bereich von 2 bis 5 Milligramm pro Liter liegt.

20. Verfahren nach Anspruch 16 oder 17, bei dem die konzentrierte flüssige Biozidzusammensetzung nach Bedarf in den Wasserkörper eingebracht wird, so dass in dem Wasserkörper der Bereich von 2 bis 10 Milligramm an gesamtem verfügbarem Halogen, ausgedrückt als Cl₂, pro Liter aufrechterhalten wird.

21. Verfahren nach Anspruch 20, bei dem das gesamte verfügbare Halogen, ausgedrückt als Cl₂, im Bereich von 2 bis 5 Milligramm pro Liter liegt.

22. Verfahren nach Anspruch 16 oder 17, bei dem als (a) Bromchlorid verwendet wird.

23. Verfahren nach Anspruch 22, bei dem das Atomverhältnis größer als 1 ist.

24. Verfahren nach Anspruch 22, bei dem die wässrige Lösung von Alkalimetallsalz von Sulfaminsäure eine wässrige Lösung des Natriumsalzes von Sulfaminsäure ist.

25. Verfahren nach Anspruch 22, bei dem die wässrige Lösung des Alkalimetallsalzes von Sulfaminsäure gebildet wird, indem in Wasser (i) Sulfaminsäure und/oder ein Alkalimetallsalz von Sulfaminsäure und (ii) Alkalimetallbase in solchen Proportionen zusammengemischt werden, dass eine wässrige Lösung des Alkalimetallsalzes von Sulfaminsäure mit einem pH-Wert von mindestens 7 gebildet wird.

26. Verfahren nach Anspruch 25, bei dem die Alkalimetallbase eine Natriumbase ist, so dass die wässrige Lösung des Alkalimetallsalzes von Sulfaminsäure eine wässrige Lösung des Natriumsalzes von Sulfaminsäure ist.

27. Verfahren nach Anspruch 25, bei dem zu dem Zeitpunkt, wenn (i) und (ii) zusammengemischt werden, die Alkalimetallbase in Form einer zuvor gebildeten wässrigen Lösung von Alkalimetallbase vorliegt und (i) Sulfaminsäure in Form einer zuvor gebildeten Aufschlämmung von Sulfaminsäure in Wasser vorliegt.

28. Verfahren nach Anspruch 22, bei dem die konzentrierte flüssige Biozidzusammensetzung ferner Alkalimetallchlorid umfasst.

29. Verfahren nach Anspruch 22, bei dem die konzentrierte flüssige Biozidzusammensetzung ferner Alkalimetallbromid umfasst.

30. Verfahren nach Anspruch 28, bei dem das Alkalimetall Natrium ist.

31. Verfahren nach Anspruch 29, bei dem das Alkalimetall Natrium ist.

32. Verfahren nach Anspruch 16 oder 17, bei dem der pH-Wert im Bereich von 7 bis etwa 13,5 liegt.

33. Verfahren nach Anspruch 16 oder 17, bei dem als (a) Alkalimetalldichlorhypobromit verwendet wird.

34. Verfahren nach Anspruch 33, bei dem das Alkalimetalldichlorhypobromit eine zuvor gebildete wässrige Lösung von Alkalimetalldichlorhypobromit ist und die wässrige Lösung des Alkalimetallsalzes von Sulfaminsäure eine zuvor gebildete wässrige Lösung des Natriumsalzes von Sulfaminsäure ist.

35. Verfahren nach Anspruch 34, bei dem die zuvor gebildete wässrige Lösung des Alkalimetalldichlorhypobromits eine zuvor gebildete wässrige Lösung von Natriumdichlorhypobromit ist.

36. Nicht-therapeutisches Verfahren zum Vernichten von Biofilm, bei dem der Biofilm mit eine wässrigen Medium in Kontakt gebracht wird, das eine Biofilm vernichtende Konzentration einer Biozidzusammensetzung, die aus (a) Bromchlorid und (b) Alkalimetall von Sulfaminsäure in Wasser gebildet worden ist, in solchen Mengen enthält, dass das Atomverhältnis von Stickstoff zu aktivem Brom in der Zusammensetzung größer als 0,93 ist.

37. Verfahren nach Anspruch 36, bei dem der Biofilm *P. Aeroginosa* umfasst.

38. Verfahren nach Anspruch 37, bei dem der Biofilm ferner *K*. *pneumoniae* umfasst.

39. Nicht-therapeutisches Verfahren zum Töten von Bakterien, die *E*. *coli, P*. *aeruginosa* oder *S. aureus* umfassen, bei dem die Bakterien mit einem wässrigen Medium in Kontakt gebracht werden, das eine Bakterien tötende Konzentration einer aktives Brom enthaltenden Biozidzusammensetzung, die aus (a) Bromchlorid und (b) Alkalimetall von Sulfaminsäure in Wasser gebildet worden ist, in solchen Mengen enthält, dass das Atomverhältnis von Stickstoff zu aktivem Brom in der Zusammensetzung größer als 0,93 ist.

40. Verfahren nach Anspruch 3, bei dem die aktives Brom enthaltende Zusammensetzung mit Wasser verdünnt wird, bevor die Zusammensetzung auf die Oberfläche aufgebracht wird.
